# EUROPEAN PATENT SPECIFICATION

(11) **EP 2 405 734 B1**
(45) Date of publication and mention of the grant of the patent: **16.07.2014**
(21) Application number: 10751349.1
(22) Date of filing: 10.03.2010
(51) Int. Cl.: A01B 69/00, B62D 15/02, G01D 5/14, G01D 5/347

(54) **STEERING ANGLE SENSOR**
LENKWINKELSENSOR
CAPTEUR D'ANGLE DE BRAQUAGE

(30) Priority: 11.03.2009 US 402008
(43) Date of publication of application: 18.01.2012
(73) Proprietor: Kostal Of America, Troy, MI 48083 (US)
(72) Inventor: HOSKINS, Steven, R., Walled Lake MI 48390 (US); TEFEND, Michael, F., Lake Orion MI 48362 (US)
(74) Representative: Brosch, Oliver
(86) International application number: PCT/US2010/026813
(87) International publication number: WO 2010/104942

(56) References cited:
- EP-A1- 1 813 511
- WO-A1-2007/107649
- FR-A1- 2 898 973
- US-A- 5 506 776
- US-A1- 2006 152 214
- US-A1- 2008 307 873
- US-A1- 2009 051 352
- US-B2- 7 085 638

## Description

### CROSS-REFERENCE TO RELATED APPLICATIONS

This application claims the benefit of and priority to U.S. Patent Application No. 12/402,008, filed March 11, 2009, titled: STEERING ANGLE SENSOR, in the name of Hoskins, et al.

### BACKGROUND

The present disclosure relates to a steering angle sensor for determining the absolute angular position of the steering wheel for use in a motor vehicle. More particularly, the present disclosure relates to an absolute steering angle sensor that utilizes a first sensor for determining angular position over a single turn of the steering wheel and a second sensor for determining the turn number of the steering wheel.

The steering angle or the steering angle deflection (or steering position, movement or rotation) in motor vehicles is required by at least a driving dynamics control system for proper control and handling of the vehicle. Such a driving dynamics control system uses the aforementioned steering angle values and other measured data (e.g., the rotational speed of the wheels or the turning of the motor vehicle about its vertical axis) to affect other vehicle systems such as for ride and handling and safety. The absolute steering angle deflection as well as the steering speed are required for evaluating these values by the driving dynamics control system together with the other measured data, with the evaluation producing resulting data used by other vehicle systems such as for controlling actuators (e.g., the brakes on the wheels to affect vehicle speed and stability and/or the engine management system of the vehicle to control various engine parameters such as engine speed and power delivered to and by the drive train).

Steering angle sensors are available in a number of different designs using different measuring principles. For example, from DE 43 00 663 C1, a steering angle sensor is known in which light barriers are distributed along the perimeter for sensing of a code placed on an aperture ring. With the disclosed sensor from DE 43 00 663 C1 it is possible to ascertain the absolute angular setting relative to one complete revolution of the steering wheel.

Likewise relative to one full revolution, the optical-electronic steering angle sensor known from DE 40 22 837 A1 measures the angular position of the steering wheel. The steering angle sensor disclosed in this document consists of two elements positioned in parallel and at a distance to each other. In this embodiment, one element is a light source and the other element is a line sensor. The steering angle sensor known from DE 40 22 837 A1 also includes a code disk located between the light source and the line sensor and the code disk is connected to and rotates with the steering wheel spindle. A CCD sensor is used as the line sensor in this embodiment. The code generator is designed as a light slit disk and for its code track it uses a spiral increasing in size from inside to outside. By means of the lighting of the image points of the cell sensor at a particular steering lock, it is possible to obtain information about the actual steering angle lock.

Known solutions to this problem rely on mechanical elements for determining the completed, full revolution of the steering wheel. This kind of mechanical design is described in DE 196 01 965 A1, wherein a 360 degree optical-electronic sensor is described which is supplemented with a mechanical counter for the revolutions. Based on the mechanical translation gearing used in this device, with this design we in turn lose the advantages of contactless sensor technology, such as non-wear and low-noise attributes.

Document WO 2007/107649 A1 discloses a steering angle sensor for determining the angular position of a steering wheel shaft of a motor vehicle having a first, a second and a third rotational member. Moreover, a reduction gear couples the second and the third rotational members with the first rotational member.

The steering angle sensor further comprises a first sensing device which is positioned adjacent to the second rotational member and second sensors positioned adjacent to the third rotational member.

The third rotational member includes an indexing element, wherein the indexing element and the second sensors are cooperatively positioned to generate a signal used to determine the number of rotations of the steering wheel shaft.

Notwithstanding these many known solutions, there remains a significant and long felt need for an improved steering angle sensor for determining the absolute angular position of the steering wheel of a motor vehicle which has a measured range going beyond 360 degrees and which is able to achieve more accurate measured results with simple devices and without additional mechanical expense and complexity. Further, there remains a significant and long felt need for an improved steering angle sensor for determining the absolute angular position of the steering wheel of a motor vehicle which has a measured range beyond 360 degrees and which can confirm proper functioning of the device.

### SUMMARY

A steering angle sensor for determining absolute angular position of a steering wheel for use in a motor vehicle is disclosed. The steering angle sensor according to the invention includes a steering angle sensor for determining absolute angular position of a steering wheel shaft of a motor vehicle, the steering angle sensor including a first rotational member for coupling to the steering wheel shaft; the steering wheel shaft and the first rotational member being rotatable about a first rotational axis through a rotational range including a plurality of revolutions of the steering wheel shaft; a second rotational member rotatable about a second rotational axis, the second rotational member being directly coupled to the first rotational member; a first sensing device including a first sensing element, the first sensing device positioned adjacent to the second rotational member to generate a first signal used to determine rotational position of the second rotational member over a single turn of the second rotational member; a third rotational member rotatable about a third rotational axis, a reduction gear which directly couples the second and third rotational members; at least four second sensors positions adjacent to the third rotational member; and the third rotational member includes a plurality of indexing elements disposed on the third rotational member and at least partially circumscribing the third rotational axis, the indexing elements and the second sensors cooperatively positioned to generate a second signal used to determine the number of rotations of the steering wheel shaft.

The steering angle sensor according to one exemplary embodiment further includes a steering angle sensor for determining absolute angular position of a steering wheel shaft of a motor vehicle, the steering angle sensor including an error checking sensor for sensing rotation of the steering wheel shaft and comparing it to the output of the steering wheel sensor to identify a condition where the steering wheel shaft is rotating but the steering angle sensor is not detecting and/or outputting such rotation.

### BRIEF DESCRIPTION OF THE DRAWINGS

Additional embodiments and favorable refinements of the devices according to this disclosure are also indicated from the following description of the attached figures. These figures illustrate the design formats of the article according to this disclosure and explain it in greater detail.
FIG. 1 is a partial, perspective view showing an embodiment of the steering angle sensor coupled to a mounting bracket for use with a steering column according to an exemplary embodiment;
FIG. 2 is an exploded perspective view showing an embodiment of the steering angle sensor according to one exemplary embodiment;
FIG. 3 is a perspective view of the steering angle sensor shown in FIG. 2 partially assembled;
FIG. 4 is a perspective view of the gear train and circuit board layout of the steering angle sensor of one exemplary embodiment;
FIG. 5A is a partial perspective view of the steering angle sensor showing one side of a circuit board according to an exemplary embodiment;
FIG. 5B is a partial bottom perspective view of the steering angle sensor showing an alternate side of the circuit board of FIG. 4A according to an exemplary embodiment;
FIG. 5C is a partial cross-sectional view of the printed circuit board, gear train and sensors according to an exemplary embodiment;
FIG. 6A is a state pattern graph showing the output signal of the steering angle sensor through 740 degrees 3-bit two revolutions of the steering column having a steering angle sensor according to one exemplary embodiment indicating the relationship between the output of a first sensor representing the angular position of the steering wheel and a second sensor representing the turn number of the steering wheel.
FIG. 6B is a state pattern graph showing the output signal of the steering angle sensor through 900 degrees 4-bit one revolutions of the steering column having a steering angle sensor according to one exemplary embodiment indicating the relationship between the output of a first sensor representing the angular position of the steering wheel and a second sensor representing the turn number of the steering wheel.

### DETAILED DESCRIPTION

Various exemplary embodiments of the present disclosure will be described with reference to the accompanying figures. It is to be noted that the same or similar reference numerals are applied to the same or similar parts or elements throughout the Figures, and the description of the same or similar parts and elements will be omitted or simplified.

In the following description, specific details may be set forth, such as specific materials, process and equipment, in order to provide a more thorough understanding of the disclosed exemplary embodiments. It will be apparent, however, to one having ordinary skill in the art that the present disclosed embodiments may be practiced without these specific details or with alternate specific details as would be understood by those skilled in the art. In certain instances, well-known manufacturing materials, processes, and equipment are not set forth as they are well understood by one having ordinary skill in the art.

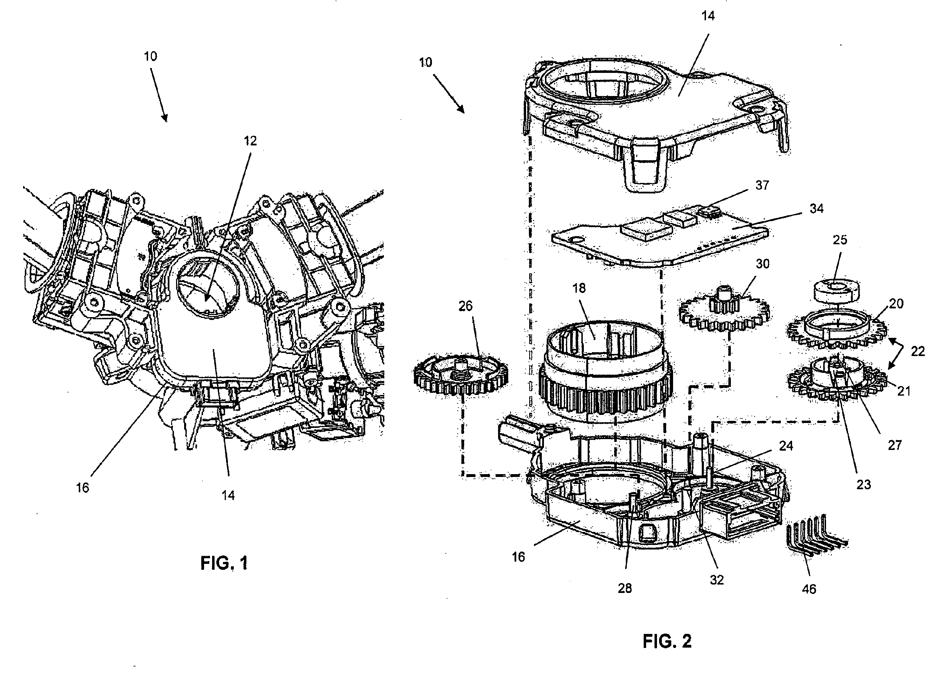

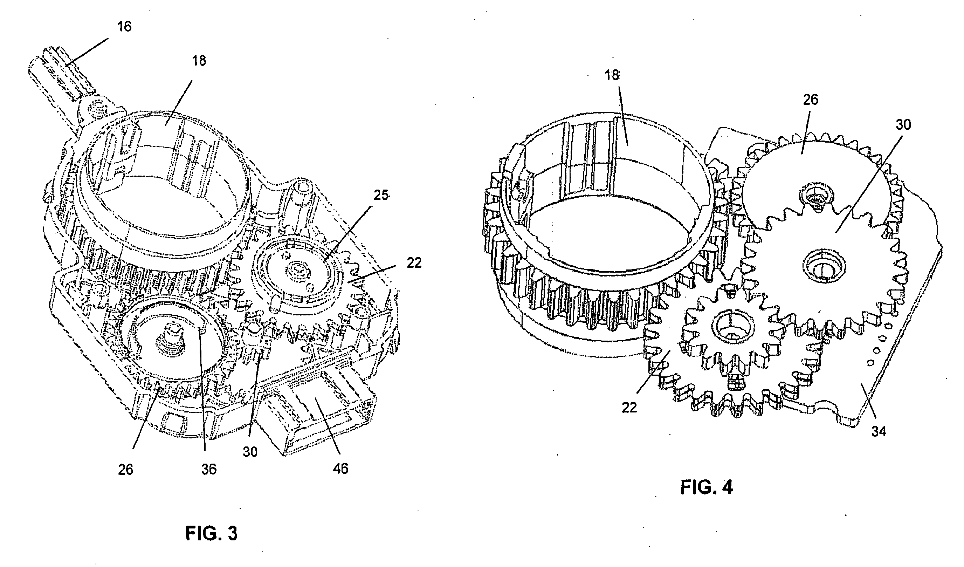

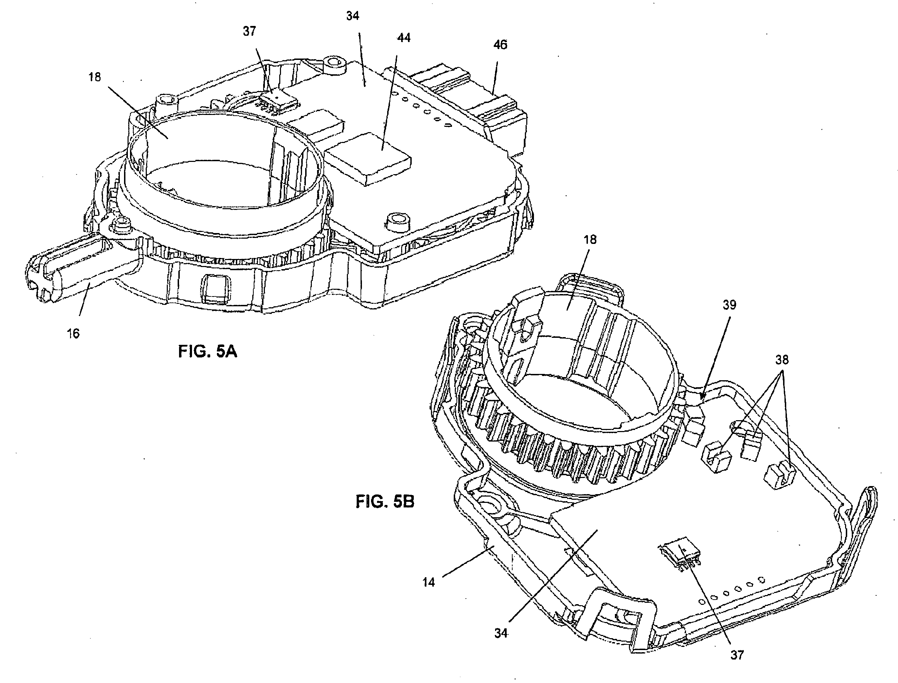

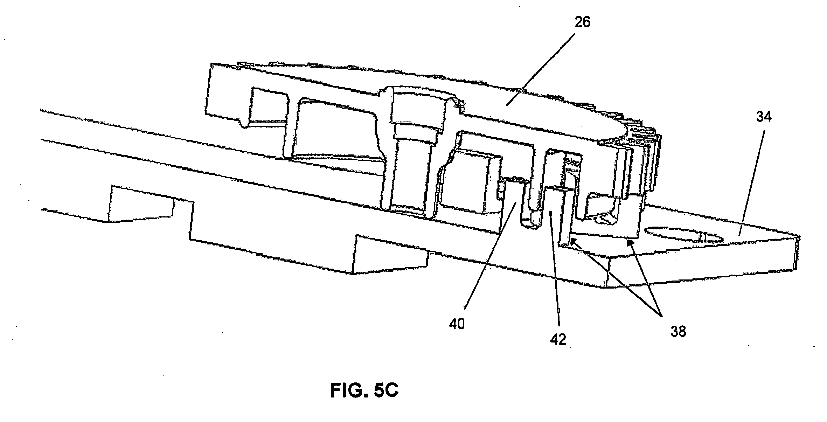

Referring generally to the Figures and in particular to Figures 1-5C, a steering angle sensor assembly 10 is shown according to an exemplary embodiment. The steering angle sensor assembly 10 is for measuring a steering angle of a steering shaft (or rotor) 12 to be mounted in a vehicle (not shown). The steering angle sensor assembly 10 includes an upper housing portion 14 coupled or mated to a lower housing portion 16. The housing portions 14, 16 enclose the other components of the steering angle sensor assembly 10. The housing portions 14, 16 may be coupled together using any known or appropriate coupling device including bayonet (or snap) locks as best shown in Figure 1.

The steering angle sensor assembly 10 includes a first rotating member (or gear or input gear) 18 for being concentrically mounted to the steering shaft 12. The steering shaft 12 is rotatable about an axis defined by the steering shaft 12 and has a rotational range which includes a plurality of revolutions of the steering wheel shaft 12. A second or split-gear assembly 22 comprised of a spur gear 20 and a split gear 21 rotates about a hub 24 which defines a second rotational axis and is operably coupled to the input gear 18.

In general, the split gear assembly 22 includes the spur gear 20 and the split gear 21 and is smaller in diameter than the input gear 18. The second or split gear assembly 22 has fewer gear teeth than the input gear 18. The split gear assembly 22 includes a biasing member 23, which can be any known or appropriate biasing device such as spring 23. The biasing member 23 biases the spur gear 20 and the split gear 21 in opposite directions about the center of rotation 27 of the split gear assembly 22. The spring 23 is disposed in recesses in the spur gear 20 and the split gear 21 that causes the teeth of the split gear assembly 22 to be biased away from the teeth of the spur gear 18. By biasingly offsetting the spur gear 20 and the split gear 21 the gear mesh between the split gear assembly 22 and the input gear 18 is significantly improved to the point that the split gear assembly 22 reduces hysteresis and gear lash (i.e., loss in motion) there between. With no hysteresis or gear lash, there is no error introduced into the steering angle sensor 10.

The second or split gear assembly 22 includes a multi-pole magnet 25 (north/south poles) which is concentrically mounted to the gear assembly 22, as best shown in Figure2. The magnet 25 may be made of various materials well known to those in the art including ceramic materials, ferrous powder with ceramic, or nylon binders, or the like provided such materials provide a multiple pole device that can be detected.

A third gear 26 rotatable about a hub 28 of the housing member 16 which defines a third rotational axis. The third gear 26 is operatively connected to the second gear assembly 22 through an idler or reduction gear mechanism 30 rotatable about a hub 32 of the housing member 16. By utilizing the reduction gear mechanism 30, the rotational displacement of the third gear assembly 26 is less than the corresponding rotational displacement of the second gear assembly 22 and, as discussed below, generates a signal indicative of the number of turns (turn number) of the shaft 12.

The steering angle sensor 10 includes a printed circuit board 34 adjacently disposed to the gear assemblies 18, 22, 26, and 30. The printed circuit board 34 includes a first detector unit 37 disposed thereon for measuring the speed and direction of steering wheel rotation. The first detector 37 is preferably a multi-axis sensor (Melxis, Concord, New Hampshire). The multi-sensor axis 37 is preferably a Hall effect sensor stationarily mounted onto the printed circuit board 34 directly adjacent to the magnet 25 in an axial direction of the second gear assembly 22 to detect the orientation of a magnetic field generated by the magnet 25 which rotates above the surface of the detector 37. The first detector 37 measures the absolute angle (0-360°) and speed of steering wheel shaft 12 based on the rotation of the input gear 18 and the second gear assembly 22 and their respective gear ratio.

The third gear 26 also includes a plurality of indexing elements 36 disposed thereon. The indexing elements 36 extend upward from the gear 26 and each partially circumscribes the third rotational axis defined about the third hub 28.

Referring specifically to Figure 5B, a plurality of sensors 38 including optical sensors 38 or magnetic sensors are also mounted to the circuit board 34 (Rohm or SunLed both from Japan for optical sensors and Allegro (Japan) or Honeywell (United States) for magnetic sensors). The optical sensors 38 include both an emitter portion 40 and a receiver portion 42. A space is defined between the emitter portion 40 and the receiver portion 42 in which the respective indexing elements 36 intermittently pass through. As the indexing elements 36 pass between the emitter portion 40 and the receiver portion 42, a light beam transmitted by the emitter portion 40 and received by the receiver portion 42 is broken thereby generating a signal used to determine the number of rotations (turn number) of the steering wheel shaft 12.

The signals generated by the first detector 37 and the optical or second sensors 38 are electrically transmitted to a logic module (ST or Renesas both from Japan) (microcontroller) 44 also disposed on the circuit board 34. The logic module 44 receives and processes the signals from the first detector 37 and the second sensors 38 to determine in which of the revolutions the second or splint gear assembly 22 is positioned, based on the second signal. The logic module 44 circulates the rotational position of the first gear 18 based on both the first and second signals over a plurality of revolutions of the first gear 18.

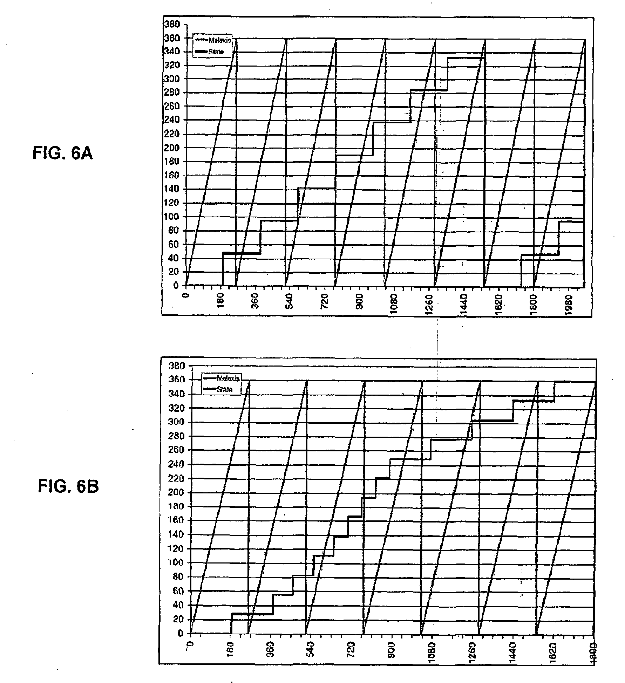

As shown in Figures 6A and 6B, the first detector 37 produces output angle signals (denoted first detector) which enable detection of a rotational angle of the second gear assembly 22. The output from the second sensors 38 (denoted second detector) produce a step number which is indicative of the turn number of the steering wheel shaft 12.

In operation, it is critical that the third gear 26 having the indexing elements 36 disposed thereon completes two or less full turns during lock-to-lock turning of the shaft 12. It is critical that gear 28 does not repeat after two revolutions otherwise the sensor will report an ambiguous measurement (angle).

An electrical connector 46 is also included so that the steering angle sensor assembly 10 can be connected to a power source (not shown) to receive operational power and also to be able to transmit data generated thereby to other receivers and/or computers.

According to one exemplary embodiment, an additional sensor may be included for monitoring the steering angle sensor system. For example, a sensor 39 is located on the circuit board 34 and located proximal the first gear 18 to monitor movement of the first gear 18 such as the movement of the teeth of the gear 18. The sensor 39 is preferably a simple, low cost type that produces a signal that is easily processed by the steering angle sensor 10 to detect any malfunctioning of the device, in particular the gears. The sensor 39 is positioned to monitor the movement of the gear teeth of the first gear 18 and to produce a signal representative of such movement. The circuit or processor 44 of the steering angle device 10 processes the signal from the sensor 39 and compares it to the output of the steering angle sensor 10. If the processor 44 compares the signals and determines that the sensor 39 is detecting movement of the first gear 18 but that there is no steering angle sensor output, such as could happen with a damaged device, it reports an error signal which may be utilized by the safety systems to disable and/or limit use of the vehicle.

As set forth above, while the steering angle sensor receives operational power from a power source and transmits data generated to other receivers and/or computers via the electrical connector, the electrical connector may be replaced with alternative suitable components with the same functions.

The embodiments are therefore to be considered in all respects as illustrative and not restrictive, the scope of the present disclosure being indicated by the appended claims rather than by the foregoing description.

## Claims

1. A steering angle sensor for determining angular position of a steering wheel shaft of a motor vehicle, the steering angle sensor comprising:
- a first rotational member (18) for coupling to a steering wheel shaft (12), the steering wheel shaft (12) and the first rotational member (18) being rotatable about a first rotational axis through a rotational range including a plurality of revolutions of the steering wheel shaft (12);
- a second rotational member (22) rotatable about a second rotational axis, the second rotational member (22) being directly coupled to the first rotational member (18);
- a first sensing device (37) including a first sensing element (25), the first sensing device being positioned adjacent to the second rotational member (22) to generate a first signal used to determine rotational position of the second rotational member (22) over a single turn of the second rotational member (22);
- a third rotational member (26) rotatable about a third rotational axis, -
- a reduction gear (30) which directly couples the second and third rotational members (22, 26);
- at least four second sensors (38) positions adjacent to the third rotational member; wherein
- the third rotational member (26) includes a plurality of indexing elements (36) disposed on the third-rotational member (26) and at least partially circumscribing the third rotational axis, the indexing elements and the second sensors (38) cooperatively positioned to generate a second signal used to determine the number of rotations of the steering wheel shaft (12).

2. The steering angle sensor of claim 1, further comprising a logic module (44) to receive and process signals from the first sensing device (37) and the second sensors (38) to determine the rotational position of the first rotational member (18) based on the first signal and the second signal over a plurality of revolutions of the first rotational member (18).

3. The steering angle sensor of claim 1, wherein the second sensors (38) include an emitter portion and a receiver portion.

4. The steering angle sensor of claim 3, wherein the second sensors (38) are optical sensors.

5. The steering angle sensor of claim 1, wherein the first sensing element (25) comprises a multi-axis detector adapted to measure speed and direction of rotation of the shaft of the steering wheel.

6. The steering angle sensor of claim 5, wherein the multi-axis detector comprises a magnetic sensor.

7. The steering angle sensor of claim 5 further comprising a magnetized portion magnetized in alternate magnetic fields, wherein the magnetic sensor is configured to detect the orientation of magnetic field generated by the magnetized portion.

8. The steering angle sensor of claim 7, wherein the magnetized portion is affixed to the second rotational member (22).

9. The steering angle sensor of claim 8, wherein the magnetized portion is concentrically disposed with respect to the second rotational member (22).

10. The steering angle sensor of claim 1, wherein the second rotational member (22) comprises a split-gear (20, 21).

11. The steering angle sensor of claim 1, wherein each indexing element (36) passes between the emitter portion and receiver portion of the second sensors (38).

12. The steering angle sensor of claim 1, **characterized by** further comprising:
- a third sensing device positioned adjacent to the first rotational member (18) to monitor movement of the first rotational member (18) and to generate a third signal used to report an error signal when there is movement of the first rotational member (18) and no movement of the second and third rotational members (22), (26).

13. The steering angle sensor of Claim 1, wherein the first rotational axis, the second rotational axis, and the third rotational axis are parallel to each other.

## Patentansprüche

1. Lenkwinkelsensor zum Bestimmen der Winkelposition einer Lenksäule eines Kraftfahrzeugs, wobei der Lenkwinkelsensor Folgendes umfasst:
- ein erstes Drehelement (18) zum Koppeln mit einer Lenksäule (12), wobei die Lenksäule (12) und das erste Drehelement (18) um eine erste Drehachse über einen Drehbereich drehbar sind, der mehrere Umdrehungen der Lenksäule (12) umfasst;
- ein zweites Drehelement (22), das um eine zweite Drehachse drehbar ist, wobei das zweite Drehelement (22) mit dem ersten Drehelement (18) direkt gekoppelt ist;
- eine erste Erfassungsvorrichtung (37), die ein erstes Erfassungselement (25) enthält, wobei die erste Erfassungsvorrichtung in der Nähe des zweiten Drehelements (22) positioniert ist, um ein erstes Signal zu erzeugen, das verwendet wird, um die Drehposition des zweiten Drehelements (22) über eine einzige Drehung des zweiten Drehelements (22) zu bestimmen;
- ein drittes Drehelement (26), das um eine dritte Drehachse drehbar ist,
- ein Untersetzungsgetriebe (30), das direkt mit dem zweiten und dem dritten Drehelement (22, 26) gekoppelt ist;
- wenigstens vier zweite Sensoren (38), die in der Nähe des dritten Drehelements positioniert sind; wobei
- das dritte Drehelement (26) mehrere Indexierungselemente (36) umfasst, die an dem dritten Drehelement (26) angeordnet sind und wenigstens teilweise die dritte Drehachse umschreiben, wobei die Indexierungselemente und die zweiten Sensoren (38) zusammenwirkend positioniert sind, um ein zweites Signal zu erzeugen, das verwendet wird, um die Anzahl von Umdrehungen der Lenksäule (12) zu bestimmen.

2. Lenkwinkelsensor nach Anspruch 1, der ferner ein Logikmodul (44) umfasst, um Signale von der ersten Erfassungsvorrichtung (37) und den zweiten Sensoren (38) zu empfangen und zu verarbeiten, um die Drehposition des ersten Drehelements (18) anhand des ersten Signals und des zweiten Signals über mehrere Umdrehungen des ersten Drehelements (18) zu bestimmen.

3. Lenkwinkelsensor nach Anspruch 1, wobei die zweiten Sensoren (38) einen Senderabschnitt und einen Empfängerabschnitt umfassen.

4. Lenkwinkelsensor nach Anspruch 3, wobei die zweiten Sensoren (38) optische Sensoren sind.

5. Lenkwinkelsensor nach Anspruch 1, wobei das erste Erfassungselement (25) einen mehrachsigen Detektor umfasst, der dafür ausgelegt ist, die Drehzahl und die Drehrichtung der Säule des Lenkrades zu messen.

6. Lenkwinkelsensor nach Anspruch 5, wobei der mehrachsige Detektor einen Magnetsensor umfasst.

7. Lenkwinkelsensor nach Anspruch 5, der ferner einen magnetisierten Abschnitt umfasst, der mit Wechselmagnetfeldern magnetisiert ist, wobei der Magnetsensor konfiguriert ist, die Orientierung des durch den magnetisierten Abschnitt erzeugten Magnetfeldes zu detektieren.

8. Lenkwinkelsensor nach Anspruch 7, wobei der magnetisierte Abschnitt an dem zweiten Drehelement (22) befestigt ist.

9. Lenkwinkelsensor nach Anspruch 8, wobei der magnetisierte Abschnitt in Bezug auf das zweite Drehelement (22) konzentrisch angeordnet ist.

10. Lenkwinkelsensor nach Anspruch 1, wobei das zweite Drehelement (22) ein Schlitzzahnrad (20, 21) umfasst.

11. Lenkwinkelsensor nach Anspruch 1, wobei sich jedes Indexierungselement (36) zwischen dem Senderabschnitt und dem Empfängerabschnitt der zweiten Sensoren (38) bewegt.

12. Lenkwinkelsensor nach Anspruch 1, **dadurch gekennzeichnet, dass** er ferner Folgendes umfasst:
- eine dritte Erfassungsvorrichtung, die in der Nähe des ersten Drehelements (18) positioniert ist, um die Bewegung des ersten Drehelements (18) zu überwachen und um ein drittes Signal zu erzeugen, das verwendet wird, um ein Fehlersignal zu melden, wenn eine Bewegung des ersten Drehelements (18) vorhanden ist und keine Bewegung des zweiten und des dritten Drehelements (22), (26) vorhanden ist.

13. Lenkwinkelsensor nach Anspruch 1, wobei die erste Drehachse, die zweite Drehachse und die dritte Drehachse zueinander parallel sind.

## Revendications

1. Capteur d'angle de braquage destiné à déterminer la position angulaire de l'arbre du volant de direction d'un véhicule à moteur, le capteur d'angle de braquage comportant :
- un premier organe rotatif (18) destiné à se coupler à un arbre (12) de volant de direction, l'arbre (12) de volant de direction et le premier organe rotatif (18) pouvant tourner autour d'un premier axe de rotation sur une plage de rotation comprenant une pluralité de tours de l'arbre (12) de volant de direction ;
- un deuxième organe rotatif (22) pouvant tourner autour d'un deuxième axe de rotation, le deuxième organe rotatif (22) étant directement couplé au premier organe rotatif (18) ;
- un premier dispositif (37) de détection comprenant un premier élément (25) de détection, le premier dispositif de détection étant positionné au voisinage du deuxième organe rotatif (22) pour générer un premier signal utilisé pour déterminer la position angulaire du deuxième organe rotatif (22) sur un seul tour du deuxième organe rotatif (22) ;
- un troisième organe rotatif (26) pouvant tourner autour d'un troisième axe de rotation,
- un pignon réducteur (30) qui couple directement les deuxième et troisième organes rotatifs (22, 26) ;
- au moins quatre positions de deuxièmes capteurs (38) adjacentes au troisième organe rotatif ;
- le troisième organe rotatif (26) comprenant une pluralité d'éléments (36) d'indexage disposés sur le troisième organe rotatif (26) et circonscrivant au moins partiellement le troisième axe de rotation, les éléments d'indexage et les deuxièmes capteurs (38) étant positionnés de façon à coopérer pour générer un deuxième signal utilisé pour déterminer le nombre de rotations de l'arbre (12) de volant de direction.

2. Capteur d'angle de braquage selon la revendication 1, comportant en outre un module logique (44) servant à recevoir et à traiter des signaux provenant du premier dispositif (37) de détection et des deuxièmes capteurs (38) pour déterminer la position angulaire du premier organe rotatif (18) sur la base du premier signal et du deuxième signal sur une pluralité de tours du premier organe rotatif (18).

3. Capteur d'angle de braquage selon la revendication 1, les deuxièmes capteurs (38) comprenant une partie émettrice et une partie réceptrice.

4. Capteur d'angle de braquage selon la revendication 3, les deuxièmes capteurs (38) étant des capteurs optiques.

5. Capteur d'angle de braquage selon la revendication 1, le premier élément (25) de détection comportant un détecteur multiaxes prévu pour mesurer la vitesse et le sens de rotation de l'arbre du volant de direction.

6. Capteur d'angle de braquage selon la revendication 5, le détecteur multiaxes comportant un capteur magnétique.

7. Capteur d'angle de braquage selon la revendication 5, comportant en outre une partie aimantée qui est aimantée suivant des champs magnétiques alternés, le capteur magnétique étant configuré pour détecter l'orientation du champ magnétique généré par la partie aimantée.

8. Capteur d'angle de braquage selon la revendication 7, la partie aimantée étant apposée sur le deuxième organe rotatif (22).

9. Capteur d'angle de braquage selon la revendication 8, la partie aimantée étant disposée de façon concentrique par rapport au deuxième organe rotatif (22).

10. Capteur d'angle de braquage selon la revendication 1, le deuxième organe rotatif (22) comportant un pignon (20, 21) en deux parties.

11. Capteur d'angle de braquage selon la revendication 1, chaque élément (36) d'indexage passant entre la partie émettrice et la partie réceptrice des deuxièmes capteurs (38).

12. Capteur d'angle de braquage selon la revendication 1, **caractérisé en ce qu'**il comporte en outre :
- un troisième dispositif de détection positionné au voisinage du premier organe rotatif (18) afin de contrôler le mouvement du premier organe rotatif (18) et de générer un troisième signal utilisé pour rendre compte d'un signal d'erreur lorsqu'il existe un mouvement du premier organe rotatif (18) et aucun mouvement des deuxième et troisième organes rotatifs (22, 26).

13. Capteur d'angle de braquage selon la revendication 1, le premier axe de rotation, le deuxième axe de rotation, et le troisième axe de rotation étant parallèles entre eux.
